# EUROPÄISCHE PATENTSCHRIFT

(11) **EP 0 684 676 B1**
(45) Veröffentlichungstag und Bekanntmachung des Hinweises auf die Patenterteilung: **12.08.1998**
(21) Anmeldenummer: 95107787.4
(22) Anmeldetag: 22.05.1995
(51) Int. Cl.: H02G 15/02, H02G 15/06, H01R 4/50

(54) **Leiterabschlussstücke für Innenkonus-Steckendverschlüsse**
Conductor end piece for the inside cone termination of connectors
Pièce d'extrémité d'un conducteur pour les terminisaisons à cône interne de connecteurs

(30) Priorität: 28.05.1994 DE 4418764
(43) Veröffentlichungstag der Anmeldung: 29.11.1995
(73) Patentinhaber: ABB PATENT GmbH, 68309 Mannheim (DE)
(72) Erfinder: Fabian, Wolfgang, D-68219 Mannheim (DE); Kurz, Adolf, D-68723 Oftersheim (DE)
(74) Vertreter: Rupprecht, Klaus, Dipl.-Ing.

(56) Entgegenhaltungen:
- DE-A- 2 312 897
- DE-B- 2 744 257
- DE-C- 396 796
- DE-C- 397 618
- GB-A- 285 379
- US-A- 2 295 899

## Beschreibung

Die Erfindung betrifft Leiterabschlußstücke nach dem Oberbegriff des Anspruchs 1.

Geräteanschlußteile nach DIN 47637 sind für Innenkonus-Steckendverschlüsse vorgesehen. Die Ausbildung der Leiterabschlußstücke am Innenkonusstecker ist für eine gute Kontaktgabe von entscheidender Bedeutung.

Aus der DE-OS 2 312 897 ist es bereits bekannt, beim Stecker einer Steckverbindung auf das abisolierte Kabelende einen Klemmkonus mit konischer Außenmantelfläche und mindestens einem Längsschlitz aufzuschieben und durch eine Spannhülse, die einen dem Außenkonus des Klemmkonus angepaßten Innenkonus besitzt, an das Leiterende anzupressen.
Weiterhin ist aus der DE-AS 2 744 257 ein geschlitzter Klemmkonus mit einem als Kontaktkörper wirkenden Klemmring und einer Anschlagscheibe bekannt.

Bei den bekannten Leiterabschlußstücken benötigt man ein relativ aufwendiges Werkzeug, und relativ viel Bewegungsfreiheit, um den Klemmring so auf den Klemmkonus aufzupressen, daß einerseits eine gute Kontaktgabe zum Leiterende und andererseits ein fester Sitz des Klemmrings auf dem Klemmkonus erreicht werden.

Aufgabe der Erfindung ist es, ausgehend von Leiterabschlußstücken nach dem Oberbegriff des Anspruchs 1 diese so auszubilden, daß ihre Montage auf dem Leiterende erleichtert wird, der auf den Klemmkonus wirkende Anpreßdruck und damit die Kontaktgabe zum Leiterende sich verbessert, und der Klemmring selbst bei großen auf ihn wirkenden Zugkräften sicher auf dem Klemmkonus gehalten wird.

Diese Aufgabe wird durch die im Anspruch 1 gekennzeichneten Merkmale gelöst. Zweckmäßige Ausgestaltungen und Weiterbildungen des Erfindungsgegenstandes sind in den Unteransprüchen genannt.

Dabei ist es aus der DE-C-396 796 für einen Kabelschuh für elektrische Leitungen an sich bekannt, den vollständig längsgeteilten Kabelschuh mit einem Gewinde zu versehen und dieses kegelig zu gestalten, so daß eine Mutter beim Einschrauben über beide Hälften diese gegen das eingeschobene Kabelende preßt.

Da erfindungsgemäß der Klemmkonus auf seiner Außenmantelfläche und der Klemmring auf seiner Innenmantelfläche jeweils mit einem Gewinde versehen sind, wobei diese Gewinde und die konische Ausbildung der beiden Teile genau aufeinander abgestimmt sind, können diese beiden Teile auf einfache Weise durch Schrauben miteinander verbunden werden. Bei einem Aufschrauben von Hand wird nicht das erforderliche Drehmoment zum Anpressen des Klemmkonus erreicht. Ein wesentliches Merkmal des Erfindungsgegenstandes sieht deshalb vor, daß Mittel vorgesehen sind, die zur Erzeugung eines erhöhten Anpreßdruckes ein erleichtertes Aufschrauben des Klemmrings auf den Klemmkonus durch Werkzeuge ermöglichen. Bei einem Klemmring, der in seiner üblichen Ausbildung eine Ringnut aufweist, in die ein Kontaktelement eingreift, ist es vorgesehen, mindestens einen der beiden, die Ringnuten einschließenden Ringwulste so breit und/oder so dick zu gestalten, daß die das Aufschrauben erleichternden Mittel an diesem Ringwulst Platz finden.

In Ausgestaltung des Erfindungsgegenstandes sind zur Erleichterung des Aufschraubens sowohl am Klemmring als auch am Klemmkonus geeignete Mittel vorgesehen. Eine geeignete Möglichkeit besteht darin, den Klemmring mit Schlüsselflächen und/oder Bohrungen und/oder Nuten zu versehen, so daß geeignete Angriffsflächen entstehen, die das Ansetzen eines Schraubschlüssels ermöglichen. Der Schraubschlüssel kann im einfachsten Fall ein normaler Schraubenschlüssel oder auch ein spezieller an vorgesehene Angriffsflächen angepaßter Schlüssel sein.

Beim Aufschrauben des Klemmrings auf den Klemmkonus sollte dieser so gehalten werden können, daß er sich nicht mitdreht. Hierzu geeignete Mittel können ähnlich wie die beim Klemmring ausgebildet sein. So ist es möglich auch den Klemmkonus mit Schlüsselflächen und/oder Bohrungen und/oder Nuten zu versehen, die das Ansetzen eines Schraubschlüssels ermöglichen.

Generell wird man sich bemühen, den Klemmkonus und den Klemmring so aufeinander und auf den Durchmesser des Leiterendes abzustimmen, daß bei festgeschraubtem Klemmring dieser etwa in der Mitte des Klemmkonus zu liegen kommt. In diesem Fall verbleibt beidseitig des Klemmrings am Klemmkonus Platz, um geeignete Angriffsflächen auszubilden, in denen ein angesetzter Schraubschlüssel Halt findet. Im einfachsten Fall können auch ein oder mehrere am Klemmkonus vorgesehene Schlitze direkt oder nach einer entsprechenden Verbreiterung den Eingriff eines entsprechend angepaßten Schraubschlüssels erlauben.

Eine weitere Möglichkeit, den Klemmkonus mittels eines Schlüssels in seiner Lage zu halten, besteht darin, ihn mindestens an einem seiner beiden Enden so auszubilden, daß ein mit Schlüsseleingriffen versehener Schlüsseleingriffsring, vorzugsweise ein Sechskantring, verdrehungsbündig aufsetzbar ist. Ein am freien Ende des Klemmkonus aufgesetzter Schlüsseleingriffsring könnte nach erfolgter Montage wieder entfernt werden. Aber auch am anderen Ende des Klemmkonus könnte ein geeigneter Schlüsseleingriffsring aufgesteckt werden, der an dieser Stelle nach erfolgter Montage problemlos verbleiben könnte. Um zusätzliche Teile zu vermeiden, wäre es weiterhin möglich, die Anschlagscheibe selbst so auszubilden, daß sie gleichzeitig auch als Schlüsseleingriffsring wirkt und verdrehungssicher mit dem Klemmkonus verbunden ist.

Obwohl im Prinzip bereits ein Schlitz genügt, um dem Klemmkonus beim Aufschrauben des Klemmrings eine Verringerung seines Innendurchmessers zu erlauben und damit eine Erhöhung seiner Klemmwirkung zu erreichen, ergibt sich doch eine wesentlich gleichmäßigere Verteilung des Klemmdruckes, wenn der Klemmkonus durch eine Vielzahl von Schlitzen in einzelne Segmente unterteilt wird, von denen jedes einen entsprechenden Anpreßdruck ausüben kann. Die Schlitze dürfen in diesem Fall nicht durchgehend sein, sondern müssen jeweils an Verbindungsstegen enden, wobei diese beidseitig abwechselnde jeweils am Ende des nächsten Schlitzes liegen, so daß sich eine Form ergibt, die der eines Mäanders entspricht.

Um den Kontakt zum Leiterende hin weiter zu verbessern, ist es von Vorteil, die Innenfläche des Klemmkonus mit Zähnen und/oder Schneiden zu versehen. Es ist dabei vorteilhaft, eine axiale Ausrichtung vorzunehmen, da hierdurch die Verdrehungssicherheit des Klemmkonus auf dem Leiterende gefördert wird, was das Aufschrauben des Klemmrings erleichtert.

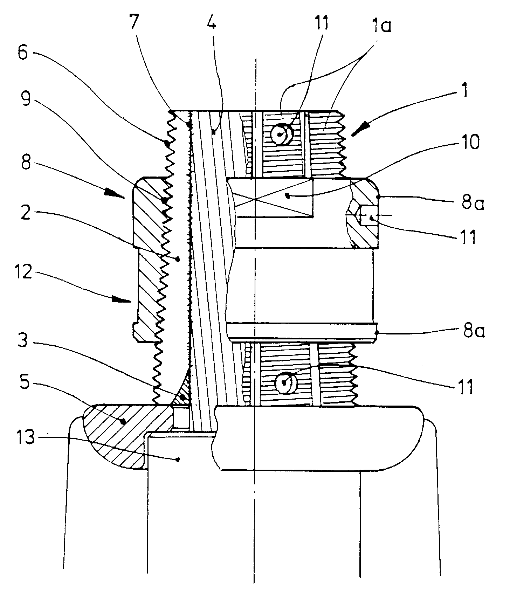

Ein Ausführungsbeispiel der Erfindung ist in der Zeichnung dargesellt und wird im folgenden näher beschrieben. Wie man erkennen kann, ist durch Entfernen einer Leiterisolierung 13 ein isolationsfreies Leiterende 4 entstanden, auf das ein mit Schlitzen 2 versehener Klemmkonus 1 aufgesteckt ist. Auf die sich zum freien Ende hin verjüngende konische Außenmantelfläche des Klemmkonus 1 ist ein Außengewinde 6 aufgebracht. Außerdem ist die mit gleicher Steigung versehene konische Innenmantelfläche eines Klemmrings 8 mit einem Innengewinde 9 versehen, und so an den Klemmkonus angepaßt, daß der Klemmring auf letzteren aufgeschraubt werden kann.

Je weiter der Klemmring 8 auf den Klemmkonus aufgeschraubt wird, umso höher ist der Anpreßdruck auf die durch Schlitze 2 voneinander getrennten und nur durch Stege 3 miteinander verbundenen Segmente la des Klemmkonus 1. Hierdurch verringert sich der Abstand der Segmente la zueinander bzw. die Schlitzenbreite der Schlitze 2 und der Klemmkonus 1 erhöht seinen Anpreßdruck auf das Leiterende 4.

Um das Aufschrauben mit entsprechender Kraft ausführen zu können, sind Mittel 10, 11 vorgesehen, die das Schrauben erleichtern. So ist beidseitig einer Ringnut 12, die zur Aufnahme eines Kontaktelementes, vorzugsweise eines Multikontaktes, dient, je ein Ringwulst 8a vorgesehen, von denen der dem freien Leiterende 4 zugewandte Ringwulst 8a so breit ist, daß er sich zur Ausbildung von Schlüsselflächen 10 und/oder Bohrungen 11 eignet, die ihrerseits das Ansetzen eines geeigneten Schraubschlüssel ermöglichen. Auch am Klemmkonus 1 sind geeignete Schlüsseleingriffe 11 in Form von Bohrungen vorgesehen, so daß der Klemmkonus 1 beim Aufschrauben des Klemmrings 8 in seiner Lage gehalten werden kann.

Weiterhin bietet der beschriebene Aufbau die Möglichkeit, die aber hier nicht dargestellt ist, daß der Klemmkonus 1 drehfest mit einer Anschlagscheibe 5 verbunden ist, die ihrerseits mit Schlüsseleingriffen versehen sein kann, um sie gegen Verdrehen zu sichern.

## Patentansprüche

1. Leiterabschlußstücke für Innenkonus-Steckendverschlüsse mit einem auf ein abisoliertes Leiterende (4) aufsteckbaren Klemmkonus (1), der mit mindestens einem axial verlaufenden Schlitz (2) versehen ist, und mit einem an die konische Außenkontur des Klemmkonus (1) angepaßten Klemmring (8), der mit seiner konischen Bohrung ein Anpressen des Klemmkonus (1) an das Leiterende ermöglicht, wobei der Klemmring (8) mindestens eine Ringnut (12) aufweist, in die ein Kontaktelement eingreift, dadurch gekennzeichnet, daß der Klemmkonus (1) entlang seiner konischen Außenkontur mit einem Außengewinde (6) auf ein in der konischen Bohrung des Klemmrings (8) vorgesehenes Innengewinde (9) abgestimmt ist, daß Mittel (10, 11) vorgesehen sind, die zur Erzeugung eines ausreichenden Anpreßdrucks ein Aufschrauben des Klemm-rings (8) auf den Klemmkonus (1) durch Werkzeuge ermöglichen, und daß mindestens einer der beiden die Ringnut (12) einschließenden Ringwulste (8a) so breit und/oder dick ist, daß die das Aufschrauben erleichternden Mittel (10, 11) an diesem Ringwulst (8a) Platz finden.

2. Leiterabschlußstücke nach Anspruch 1, dadurch gekennzeichnet, daß als Mittel zur Erleichterung des Aufschraubens an der Außenseite des Klemmrings (8) Schlüsselflächen (10) und/oder Bohrungen (11) und/oder Nuten ausgebildet sind, die das Ansetzen eines Schraubschlüssels ermöglichen.

3. Leiterabschlußstücke nach einem der vorhergehenden Ansprüche, dadurch gekennzeichnet, daß als Mittel (10, 11) zur Erleichterung des Aufschraubens an der Außenseite des Klemmkonus (1) Schlüsselflächen (10) und/oder Bohrungen (11) und/oder Nuten vorgesehen sind, die das Ansetzen eines Schraubschlüssels ermöglichen.

4. Leiterabschlußstücke nach Anspruch 3, dadurch gekennzeichnet, daß der Klemmkonus (1) und der Klemmring (8) so auf den Durchmesser des Leiterendes (4) abgestimmt sind, daß bei festgeschraubtem Klemmring (8) mindestens auf einer Seite, vorzugsweise auf der dem freien Ende des Leiterendes (4) entgegengesetzten Seite, ein Teilbereich des Klemmkonus (1) für die Mittel (10, 11) zur Erleichterung des Aufschraubens freibleibt.

5. Leiterabschlußstücke nach einem der vorhergehenden Ansprüche, dadurch gekennzeichnet, daß der mindestens eine Schlitz (2) in dem Klemmkonus (1) so breit ist oder an geeigneter Stelle so verbreitert ist, daß der Eingriff eines entsprechend angepaßten Schraubschlüssels ermöglicht ist.

6. Leiterabschlußstücke nach einem der vorhergehenden Ansprüche, dadurch gekennzeichnet, daß der Klemmkonus (1) mindestens an einem seiner beiden Enden so ausgebildet ist, daß ein mit Schlüsseleingriffen versehener Schlüsseleingriffsring, vorzugsweise ein Sechskantring, verdrehungsbündig aufsetzbar ist.

7. Leiterabschlußstücke nach Anspruch 6, dadurch gekennzeichnet, daß eine zwischen dem Klemmkonus (1) und einer sich hier anschließenden Leiterisolierung (13) vorgesehene Anschlagscheibe (5) so ausgebildet ist, daß sie als ein verdrehungsbündig am Klemmkonus (1) angreifender Schlüsseleingriffsring dienen kann.

8. Leiterabschlußstücke nach einem der vorhergehenden Ansprüche, dadurch gekennzeichnet, daß der Klemmkonus (1) mehrere axial verlaufende Schlitze (2) aufweist, die jeweils an Verbindungsstegen (3) enden, die beidseitig abwechselnd jeweils am Ende des nächsten Schlitzes (2) liegen und mit den Segmenten der Form eines Mäanders entsprechen.

9. Leiterabschlußstücke nach einem der vorhergehenden Ansprüche, dadurch gekennzeichnet, daß die Innenfläche des Klemmkonus (1) mit Zähnen und/oder Schneiden (7) versehen ist, die vorzugsweise in axialer Richtung verlaufen.

## Claims

1. Conductor end pieces for inner cone plug-in terminations, having a clamping cone (1), which can be plugged onto a stripped conductor end (4) and is provided with at least one axially extending slot (2), and having a clamping ring (8) which is matched to the conical outer contour of the clamping cone (1) and, by means of its conical bore, permits the clamping cone (1) to be pressed against the conductor end, the clamping ring (8) having at least one annular groove (12) in which the contact element engages, characterized in that, along its conical outer contour, the clamping cone (1) is tailored by means of an external thread (6) to an internal thread (9) provided in the conical bore of the clamping ring (8), in that means (10, 11) are provided which, for the purpose of producing an adequate contact pressure, permits the clamping ring (8) to be screwed onto the clamping cone (1) by means of tools, and in that at least one of the two annular beads (8a) enclosing the annular groove (12) is so wide and/or thick that the means (10, 11) facilitating the screwing-on operation find room on this annular bead (8a).

2. Conductor end pieces according to Claim 1, characterized in that spanner surfaces (10) and/or bores (11) and/or grooves which permit a spanner to be applied are constructed as the means for facilitating the screwing-on operation on the outside of the clamping ring (8).

3. Conductor end pieces according to one of the preceding claims, characterized in that spanner surfaces (10) and/or bores (11) and/or grooves which permit a spanner to be applied are provided as the means (10, 11) for facilitating the screwing-on operation on the outside of the clamping cone (1).

4. Conductor end pieces according to Claim 3, characterized in that the clamping cone (1) and the clamping ring (8) are tailored to the diameter of the conductor end (4) such that, when the clamping ring (8) is screwed tight, a subregion of the clamping cone (1) remains free for the means (10, 11) for facilitating the screwing-on operation, at least on one side, preferably on the side opposite the free end of the conductor end (4).

5. Conductor end pieces according to one of the preceding claims, characterized in that the at least one slot (2) in the clamping cone (1) is so wide that, or is widened at a suitable point such that the engagement of an appropriately matched spanner is rendered possible.

6. Conductor end pieces according to one of the preceding claims, characterized in that the clamping cone (1) is constructed at least at one of its two ends such that a spanner-engaging ring, preferably a hexagonal ring, provided with spanner-engaging means can be mounted in a fashion flush from rotation.

7. Conductor end pieces according to Claim 6, characterized in that a stop disc (5) provided between the clamping cone (1) and a conductor insulation (13) adjoining here is constructed such that it can serve as a spanner-engaging ring acting on the clamping cone (1) in a fashion flush from rotation.

8. Conductor end pieces according to one of the preceding claims, characterized in that the clamping cone (1) has a plurality of axially extending slots (2) which in each case end at connecting webs (3) which in each case are situated, in a fashion alternating on both sides, at the end of the next slot (2), and with the segments correspond to the shape of a meander.

9. Conductor end pieces according to one of the preceding claims, characterized in that the inner surface of the clamping cone (1) is provided with teeth and/or cutting edges (7), which preferably extend in an axial direction.

## Revendications

1. Pièces terminales de conducteur pour des fermetures d'extrémité enfichables à cône interne, comportant un cône de serrage (1), qui peut être monté sur une extrémité de conducteur (4) dénudée et qui est muni d'au moins une fente (2) s'étendant axialement, et comportant une bague de serrage (8) qui est adaptée au contour externe conique du cône de serrage (1) et qui permet par son trou conique un pressage du cône de serrage (1) à l'endroit de l'extrémité de conducteur, dans lesquelles la bague de serrage (8) présente au moins une rainure annulaire (12) dans laquelle entre en prise un élément de contact, caractérisées en ce que
le cône de serrage (1) est accordé le long de son contour externe conique comportant un filet externe (6) a un filet interne (9) prévu dans le trou conique de la bague de serrage (8), en ce qu'il est prévu des moyens (10, 11) qui permettent, pour la production d'un pressage suffisant, un vissage de la bague de serrage (8) sur le cône de serrage (1) par l'intermédiaire d'outils, et en ce qu'au moins un des deux bourrelets annulaires (8a) qui entourent la rainure annulaire (12) est d'une largeur et/ou épaisseur telle que les moyens (10, 11) qui facilitent le vissage trouvent une place sur ce bourrelet annulaire (8a).

2. Pièces terminales de conducteur suivant la revendication 1, caractérisées en ce qu'en tant que moyen pour faciliter le vissage, des faces pour une clé (10) et/ou des trous (11) et/ou des rainures qui permettent la mise en place d'une clé de vissage sont réalisés sur la face externe de la bague de serrage (8).

3. Pièces terminales de conducteur suivant l'une des revendications précédentes, caractérisées en ce qu'en tant que moyen (10, 11) pour faciliter le vissage, il est prévu sur le côté externe du cône de serrage (1) des faces pour clé (10) et/ou des trous (11) et/ou des rainures qui permettent la mise en place d'une clé de vissage.

4. Pièces terminales de conducteur suivant l'une des revendications précédentes, caractérisées en ce que le cône de serrage (1) et la bague de serrage (8) sont accordés par rapport au diamètre de l'extrémité de conducteur (4) de façon à ce que, lorsque la bague de serrage (8) est vissée à bloc, une zone partielle du cône de serrage (1) reste libre au moins d'un côté, de préférence du côté opposé à l'extrémité libre de l'extrémité de conducteur (4), pour les moyens (10, 11) qui facilitent le vissage.

5. Pièces terminales de conducteur suivant l'une des revendications précédentes, caractérisées en ce que ladite au moins une fente (2) du cône de serrage (1) a une largeur, ou est élargie en un endroit approprié, de façon à ce que soit rendue possible la prise d'une clé de vissage adaptée de façon correspondante.

6. Pièces terminales de conducteur suivant l'une des revendications précédentes, caractérisées en ce que le cône de serrage (1) est réalisé, au moins à une de ses deux extrémités, de façon à ce qu'une bague à prise pour clé, de préférence une bague hexagonale, munie de prises pour une clé puisse être montée de façon protégée contre une rotation.

7. Pièces terminales de conducteur suivant la revendication 6, caractérisées en ce qu'une rondelle de butée (5) prévue entre le cône de serrage (1) et un isolant de conducteur (13) qui se rattache à cet endroit est réalisée de façon à ce qu'elle puisse servir en tant qu'une bague à prise pour clé, qui agit de façon protégée contre une rotation à l'endroit du cône de serrage (1).

8. Pièces terminales de conducteur suivant l'une des revendications précédentes, caractérisées en ce que le cône de serrage (1) présente plusieurs fentes (2) qui s'étendent axialement et qui se terminent chaque fois à des âmes de raccordement (3) qui sont situées de façon alternée des deux côtés, chaque fois à l'extrémité de la fente suivante (2), et qui correspondent, avec les segments, à la forme d'un méandre.

9. Pièces terminales de conducteur suivant l'une des revendications précédentes, caractérisées en ce que la surface interne du cône de serrage (1) est munie de dents et/ou tranchants (7) qui s'étendent de préférence en direction axiale.
